# EUROPÄISCHE PATENTSCHRIFT

(11) **EP 2 809 420 B1**
(45) Veröffentlichungstag und Bekanntmachung des Hinweises auf die Patenterteilung: **01.08.2018**
(21) Anmeldenummer: 13704035.8
(22) Anmeldetag: 31.01.2013
(51) Int. Cl.: B01D 29/00, B01D 63/06

(54) **FILTERSTATION**
FILTER STATION
POSTE DE FILTRATION

(30) Priorität: 03.02.2012 DE 102012201634
(43) Veröffentlichungstag der Anmeldung: 10.12.2014
(73) Patentinhaber: Intewa GmbH, 52070 Aachen (DE)
(72) Erfinder: WURZER, Michael, 52134 Herzogenrath (DE); RINGELSTEIN, Oliver, 4720 Kelmis (BE)
(74) Vertreter: Benninger, Johannes
(86) Internationale Anmeldenummer: PCT/EP2013/051935
(87) Internationale Veröffentlichungsnummer: WO 2013/113833

(56) Entgegenhaltungen:
- EP-A2- 0 408 375
- WO-A1-00/62908
- DE-U1-202004 012 693
- US-A- 6 017 451
- US-A1- 2007 102 339

## Beschreibung

Die vorliegende Erfindung betrifft eine Filterstation zur Filtration von Wasser gemäß dem Oberbegriff des Anspruchs 1.

Bei der Reinigung von verschmutztem Wasser kommen unterschiedliche Filter zum Einsatz. Darüber hinaus sind verschiedene Filterbauarten zur Reinigung von verschmutztem Wasser in Speichern, wie Regenwasserspeichern, Grauwasserspeichern oder Speichern von Kleinkläranlagen bekannt. Filter, bei denen das verschmutzte Wasser die Filteroberfläche durchdringt, beispielsweise indem es durch die Filteroberfläche gesogen wird, müssen in regelmäßigen Zeitabständen vom anhaftenden Schmutz befreit werden. Dies kann durch Rückspülung mittels des gereinigten Wassers durch ein Filter und/oder mittels Luftblasen erfolgen, die durch ihren Auftrieb am Filtermedium vorbeiströmen und die Schmutzpartikel losreißen. Zur Reinigung von groben Schmutzstoffen werden Siebe oder Rechen verwendet. Zur Entfernung von Sedimentablagerungen sind sogenannte Mammutpumpen, Schmutzwasserpumpen oder Saugheberüberläufe bekannt. Schwimmende Schmutzstoffe können beispielsweise mit sogenannten Skimmerüberläufen abgesogen werden.

Die Qualität eines nach dem Durchlaufen eines oder mehrerer Filter vorliegenden, auch als Permeat bezeichneten Filtrats ist dabei unter anderem von der vom Filtrationsverfahren abhängigen Filterbauart, von der Filteranordnung, dem auch als Filtermedium bezeichneten Filtermaterial und der Sauberkeit bzw. Reinheit der Filteroberfläche abhängig.

Durch DE 10 2006 001 034 A1 ist eine Filteranlage mit zwei Membranfiltereinheiten bekannt, die mittels einer Pumpe über Zufuhrleitungen mit zu filtrierendem Rohwasser gespeist werden. In den Membranfiltereinheiten befinden sich mehrere röhrenförmige Membranfilterelemente, durch die das Rohwasser von unten einströmt. Das Rohwasser durchdringt hierbei die Wandungen der Membranfilterelemente um Verunreinigungen des Rohwassers zurückzuhalten. Das gefilterte Rohwasser wird als Reinigungswasser einer Reinwasserleitung zugeführt. Ein Luftkompressor leitet im Filterbetrieb Druckluft über Druckluftleitungen in das Rohwasser ein. Um bei der Filteranlage einen Rückspülbetrieb zur Reinigung der Membranfiltereinheiten zu ermöglichen, ist zwischen einer mit den Membranfiltereinheiten verbundenen Sammelleitung und der Reinwasserleitung ein Absperrventil angeordnet, welches während des Rückspülbetriebes geschlossen ist.

Durch EP 0 408 375 A2 ist eine Filterstation bekannt, welche einen oberen Anschlussverteiler und einen unteren Anschlussverteiler aufweist. Dem unteren Anschlussverteiler und dem oberen Anschlussverteiler sind mehrere Filter zwischengeordnet, die bei Bedarf ausgetauscht werden können. Jeder Filter weist ein geschlossenes Gehäuse auf, welches aus Kunststoff ausgebildet ist. Die zu filternde Flüssigkeit wird der Filterstation über einen Leitungsanschluss am unteren Anschlussverteiler zugeführt, das gefilterte Filtrat über einen Leitungsanschluss am oberen Anschlussverteiler abgeführt.

Durch US 6,017,451 ist ein mehrarmiges Anschlussteil mit einer zentralen Nabe und von dieser strahlförmig abgehender Arme bekannt. Die Arme können mit Filtermodulen gekoppelt werden. Vermittels zwischen den Armen eines oberen und eines unteren Anschlussteils angeordneter Filtermodule kann eine Filterstation aufgebaut werden. Bei der Filtration verbleibendes Permeat kann über Anschlüsse abgeführt werden.

Durch WO 00/62908 A1 ist eine Filterstation mit einem oberen Anschlussverteiler und einem unteren Anschlussverteiler bekannt. Dem unteren Anschlussverteiler kann Luft zugeführt werden.

Durch US 2007/0102339 A1 ist eine Filterstation bekannt, welche einen ersten, oberen Anschlussverteiler und einen zweiten, unteren Anschlussverteiler mit jeweils vier symmetrisch angeordneten Anschlüssen aufweist. Um die Unversehrtheit der Filter zu prüfen, besitzt die Filterstation einen Luftanschluss.

Durch DE 20 2004 012 693 A1 ist ein Kupplungssystem für Filtermodule bekannt. Eine Verbindung zwischen Filtermodul und Rohrsystem erfolgt in der D5 zumindest an einem Endbereich mittels einer Rohrkupplung, die als nicht zugfeste Rohrkupplung ausgebildet ist.

Der Erfindung liegt die Aufgabe zu Grunde, eine Filterstation zur Filtration von Wasser zu schaffen, welche für nahezu beliebig große Wassermengen einsetzbar ist und dabei an beliebige Wasseraufbereitungsmengen angepasst werden kann, sowie zumindest eine Ausgestaltung mit einer derart verbesserte Reinigungswirkung aufweist, dass sie zumindest weitgehend keimfreies Wasser zu liefern in der Lage ist.

Die Aufgabe wird gelöst durch die Merkmale des unabhängigen Anspruchs.

Weitere vorteilhafte Ausgestaltungen werden durch die Unteransprüche beschrieben.

Demnach ist eine Filterstation vorgesehen, die zwei Anschlussverteiler, einen unteren und einem oberen Anschlussverteiler, mit jeweils einer gleichen Anzahl korrespondierend angeordneter Anschlüssen umfasst. Die Anschlüsse können dabei symmetrisch an den Anschlussverteilern angeordnet sein. Am unteren und oberen Anschlussverteiler sind jeweils die gleiche Anzahl Anschlüsse vorgesehen. Vorzugsweise sind je sechs Anschlüsse vorgesehen, aber wahlweise sind auch zwei, drei, vier oder jede beliebige andere, gleiche Anzahl von Anschlüssen an den Anschlussverteilern möglich. Dabei bildet ein mit einem Anschluss des unteren Anschlussverteiler korrespondierender Anschluss des oberen Anschlussverteilers ein Anschlusspaar. Jedes Anschlusspaar dient der Aufnahme eines Filters, so dass wenn der obere und der untere Anschlussverteiler jeweils zwei oder mehr Anschlüsse aufweisen und damit zwei oder mehr Anschlusspaare vorgesehen sind, die Filterstation mehrere, in ihrer Anzahl dejenigen der Anschlusspaare entsprechend Filter aufzunehmen in der Lage ist.

Der untere Anschlussverteiler hat einen Luftanschluss zur Verbindung mit einer Luftquelle, beispielsweise einem Gebläse und/oder einer Druckluftquelle. Der obere Anschlussverteiler hat einen Leitungsanschluss zur Verbindung mit einer Pumpe.

Durch den beschriebenen Aufbau ist die Filterstation einfach skalierbar, indem je nach benötigter Wasseraufbereitungsmenge mehr oder weniger Anschlusspaare mit Filtern bestückt werden können. Die für eine zu erzielende Wasseraufbereitungsmenge maßgebliche Gesamtfilteroberfläche der Filterstation setzt sich dabei aus der Summe der Einzelfilteroberflächen der einzelnen, jeweils zwischen einem Anschlusspaar in der Filterstation verbauten Filter zusammen.

Weist eine Filterstation beispielsweise sechs Anschlusspaare bestehend aus jeweils miteinander korrespondierend angeordneten sechs Anschlüssen am oberen Anschlussverteiler und sechs Anschlüssen am unteren Anschlussverteiler auf, kann die Filterstation je nach benötigter Wasseraufbereitungsmenge mit bis zu sechs einzelnen Filtern sowie gegebenenfalls verschiedenen Gebläsen bestückt werden. Bei einem noch höheren Wasserbedarf können mehrere Filterstationen parallel betrieben werden. Ein sich zusätzlich zur Skalierbarkeit ergebender Vorteil ist, dass der redundante Aufbau mehrerer Filterstationen zu einer besonders hohen Betriebssicherheit bei größeren Systemen führt.

Erfindungsgemäß sind der erste, obere Anschlussverteiler und der zweite, untere Anschlussverteiler durch ein sich entlang einer Längsachse der Filterstation erstreckendes Zentralrohr miteinander verbunden.

Der Luftanschluss des zweiten, unteren Anschlussverteilers ist an dem Zentralrohr vorgesehen und das Zentralrohr ist an dem Luftanschluss am zweiten, unteren Anschlussverteiler angeschlossen. Wahlweise kann das Zentralrohr einen Einblasstutzen zur Verbindung mit der Luftquelle aufweisen. Erfindungsgemäß ist das Zentralrohr am ersten, oberen Anschlussverteiler derart befestigt, dass keine Strömungsverbindung zwischen dem ersten, oberen Anschlussverteiler und dem zweiten, unteren Anschlussverteiler via das Zentralrohr besteht.

Die Filterstation kann eine derart gemeinsame Verbindung des einen oder der mehreren jeweils an einem Anschlusspaar angeschlossenen Filter mit dem ersten, oberen Anschlussverteiler vorsehen, wobei zumindest der erste, obere Anschlussverteiler bevorzugt via dessen Leitungsanschluss mit mindestens einer Leitung und einer oder mehreren Pumpen in Verbindung steht, über welche vorzugsweise eine Leitung während des Filterbetriebs das Filtrat bzw. das Permeat abfließt und über welche vorzugsweise eine Leitung während eines Reinigungsprozesses ein Rückstrom von Filtrat zumindest dem ersten, oberen Anschlussverteiler und dem einen oder den mehreren zwischen den Anschlüssen des ersten, oberen Anschlussverteilers und des zweiten, unteren Anschlussverteilers angeschlossenen Filtern zugeleitet wird.

Alternativ oder zusätzlich kann die Filterstation eine derart zusätzliche gemeinsame Verbindung des einen oder der mehreren jeweils an einem Anschlusspaar angeschlossenen Filter mit dem zweiten, unteren Anschlussverteiler vorsehen, wobei zumindest der zweite, untere Anschlussverteiler als Luftverteiler vorgesehen ist. Hierzu steht wenigstens der zweite, untere Anschlussverteiler bevorzugt via dessen Luftanschluss mit einer Luftquelle, bevorzugt einer Druckluftquelle und/oder mindestens einem Gebläse in Wirkverbindung, beispielsweise indem wenigstens der zweite, untere Anschlussverteiler mit dieser zumindest zeitweise, beispielsweise während eines Reinigungsprozesses, kommuniziert. Dadurch können der eine oder die mehreren Filter zumindest über den zweiten, unteren Anschlussverteiler insbesondere während eines Reinigungsprozesses zeitgleich mit einem Rückstrom von Filtrat mit Luft beaufschlagt werden. Hierdurch kann das beispielsweise durch Fasern gebildete Filtermedium von Ablagerungen befreit werden und/oder ein Reinigungsprozess noch gründlicher ausgeführt werden.

Der untere und der obere Anschlussverteiler sind vorzugsweise kranzförmig um eine Längsachse der Filterstation angeordnet. In diesem Fall können die Anschlussverteiler jeweils als Kranz bezeichnet werden. Hierdurch wird ein besonders kompakter Aufbau erhalten, bei dem die Filter alle parallel zu einer Längsachse der Filterstation um diese herum angeordnet sein können.

Erfindungsgemäß sind an dem Leitungsanschluss über dem oberen Anschlussverteiler eine oder mehrere Unterwasserpumpen angeordnet.

Zusätzlich ist oberhalb der einen oder der zwei Unterwasserpumpen ein Behälter angebracht.

Die Filterstation zeichnet sich erfindungsgemäß durch einen mit dem ersten, oberen Anschlussverteiler kommunizierenden, im Filterbetrieb vom Filtrat bzw. Permeat durchströmten Behälter aus, welcher bei einer Rückströmung bzw. bei einem Rückstrom während eines Reinigungsprozesses einen Volumenausgleich gewährleistet.

Mindestens ein zwischen ein Anschlusspaar einzubringendes oder eingebrachtes Filter kann als ein Membranfilter ausgeführt sein. Beispielsweise in der Abwasserreinigung wird die Membranfiltertechnologie immer wichtiger. Vermittels eines Membranfilters ist eine Ultra- und Mikrofiltration möglich, bei der Partikel, Kolloide und Makromoleküle entfernt bzw. im Retentat zurückgehalten werden und nicht ins Permeat gelangen, so dass Abwasser auf diesem Wege desinfiziert werden kann.

Im Folgenden sollen Ausführungsbeispiele die Erfindung und ihre Vorteile anhand der beigefügten Figuren näher erläutern. Darin bezeichnen gleiche Bezugszeichen gleiche oder gleich wirkende Elemente. Ferner werden der Übersicht halber nur Bezugszeichen in den einzelnen Figuren dargestellt, die für die Beschreibung der jeweiligen Figur erforderlich sind. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: ein erstes Ausführungsbeispiel eine Filterstation in einer Seitenansicht.
- Fig. 2: ein zweites Ausführungsbeispiel eine Filterstation in einer Seitenansicht.
- Fig. 3: ein drittes Ausführungsbeispiel eine Filterstation in einer Draufsicht entlang deren Längsachse gesehen.

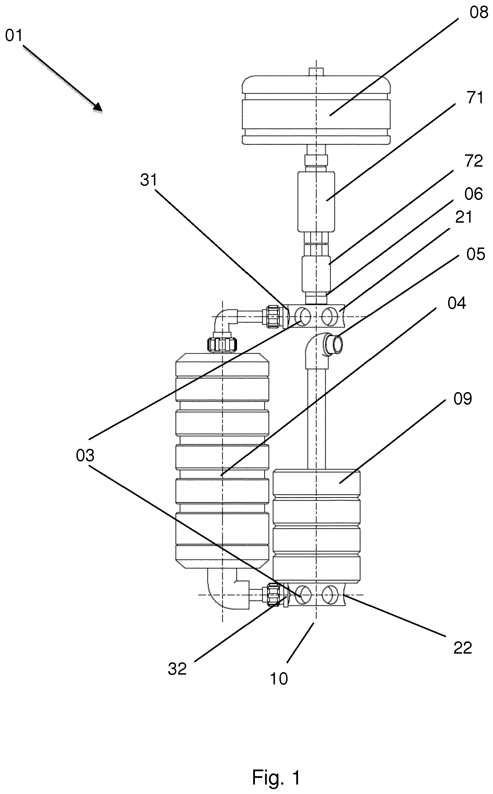

Eine in Fig. 1, Fig. 2 und Fig. 3 vollständig oder zum Teil dargestellte Filterstation 01 umfasst einen ersten, oberen Anschlussverteiler 21 und einen zweiten, unteren Anschlussverteiler 22. An jedem der Anschlussverteiler ist jeweils eine gleiche Anzahl von mehreren korrespondierend angeordneten Anschlüssen 31, 32 vorgesehen. Von diesen Anschlüssen 31, 32 bilden je ein Anschluss 31 des oberen Anschlussverteilers 21 und der entsprechende, korrespondierende Anschluss 32 des unteren Anschlussverteilers 22 jeweils ein zum Anschluss bzw. zur Aufnahme jeweils eines Filters 04 vorgesehenes Anschlusspaar 03. Dadurch ist die Filterstation 01, wenn der obere und der untere Anschlussverteiler 21, 22 jeweils zwei oder mehr Anschlüsse 31, 32 aufweisen und damit zwei oder mehr Anschlusspaare 03 vorgesehen sind, in der Lage, eine Anzahl von Filtern 04 aufzunehmen, welche der Anzahl ihrer Anschlusspaare 03 entspricht.

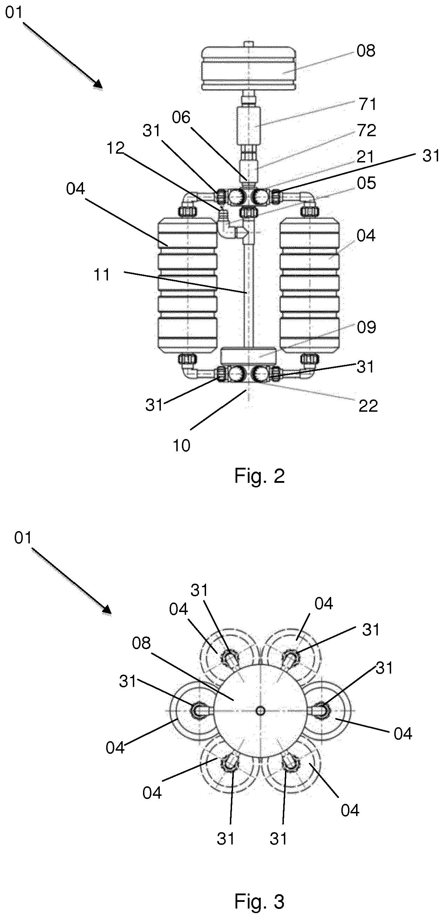

Bei der in Fig. 3 dargestellten Filterstation 01 sind beispielsweise sechs Anschlusspaare 03 bestehend aus je einem Anschluss 31 am oberen Anschlussverteiler 21 und einem korrespondierenden Anschluss 32 am unteren Anschlussverteiler 22 zur Aufnahme von bis zu sechs Filtern 04 vorgesehen.

Der untere Anschlussverteiler 22 weist einen Luftanschluss 05 zum Anschluss an eine Luftquelle, wie etwa eine Druckluftquelle oder ein Gebläse, und der obere Anschlussverteiler 21 einen Leitungsanschluss 06 zum Anschluss einer während des Filterbetriebs das Filtrat abführenden Leitung, beispielsweise einer Saugleitung und/oder einer oder mehrerer Pumpen 71, 72 auf.

Die Filterstation 01 weist bevorzugt eine derart gemeinsame Verbindung des einen oder der mehreren jeweils an einem Anschlusspaar 03 angeschlossenen Filter 04 mit dem ersten, oberen Anschlussverteiler 21 auf, dass zumindest der erste, obere Anschlussverteiler 21 bevorzugt via dessen Leitungsanschluss 06 mit mindestens einer Leitung und einer oder mehreren Pumpen 71, 72 in Verbindung steht, über welche vorzugsweise eine Leitung während des Filterbetriebs das Filtrat bzw. das Permeat abfließt und über welche vorzugsweise eine Leitung während eines Reinigungsprozesses ein Rückstrom von Filtrat zumindest dem ersten, oberen Anschlussverteiler 21 und dem einen oder den mehreren an den durch die korrespondierenden Anschlüsse 31, 32 des ersten, oberen Anschlussverteilers 21 und des zweiten, unteren Anschlussverteilers 22 gebildeten Anschlusspaaren 03 angeschlossenen Filtern 04 zugeleitet wird.

Alternativ oder zusätzlich weist die Filterstation 01 bevorzugt eine derart zusätzliche gemeinsame Verbindung des einen oder der mehreren jeweils an einem Anschlusspaar 03 angeschlossenen Filter 04 mit dem zweiten, unteren Anschlussverteiler 22 auf, dass zumindest der zweite, untere Anschlussverteiler 22 als ein Luftverteiler dient, wobei wenigstens der zweite, untere Anschlussverteiler 22 bevorzugt via dessen Luftanschluss 05 zumindest zeitweilig, beispielsweise während eines Reinigungsprozesses, mit einer Luftquelle, bevorzugt einer Druckluftquelle und/oder mindestens einem Gebläse, kommuniziert. Dadurch können der eine oder die mehreren an den durch die korrespondierenden Anschlüsse 31, 32 des ersten, oberen Anschlussverteilers 21 und des zweiten, unteren Anschlussverteilers 22 gebildeten Anschlusspaaren 03 angeschlossenen Filter 04 zumindest über den zweiten, unteren Anschlussverteiler 22 insbesondere wenigstens während eines Reinigungsprozesses vorzugsweise zeitgleich mit einem Rückstrom von Filtrat mit Luft beaufschlagt werden.

Der erste, obere Anschlussverteiler 21 und der zweite, untere Anschlussverteiler 22 können durch ein sich entlang einer Längsachse 10 der Filterstation 01 erstreckendes Zentralrohr 11 miteinander verbunden sein (Fig. 2). Dabei kann der Luftanschluss 05 des zweiten, unteren Anschlussverteilers 22 an dem Zentralrohr 11 vorgesehen sein und/oder das Zentralrohr 11 an dem Luftanschluss 05 am zweiten, unteren Anschlussverteiler 22 angeschlossen sein und einen Einblasstutzen 12 zur Verbindung mit der Luftquelle aufweisen. Ein gegebenenfalls vorgesehenes Zentralrohr 11 kann dabei derart beispielsweise am ersten, oberen Anschlussverteiler 21 befestigt sein, dass keine Strömungsverbindung zwischen dem ersten, oberen Anschlussverteiler 21 und dem zweiten, unteren Anschlussverteiler 22 via das Zentralrohr 11 besteht.

Die Anschlüsse 31 des oberen Anschlussverteilers 21 und die Anschlüsse 32 des unteren Anschlussverteilers 22 können wie in Fig. 3 dargestellt kranzförmig um die Längsachse 10 der Filterstation 01 herum angeordnet sein. In diesem Fall können die Anschlussverteiler 21, 22 jeweils als Kranz bezeichnet werden. Hierdurch wird ein besonders kompakter Aufbau erhalten, bei dem die Filter 04 alle parallel zur Längsachse 10 der Filterstation 01 um diese herum angeordnet sein können.

Eine in Fig. 3 dargestellte Filterstation 01 weist beispielsweise sechs Anschlusspaare 03 bestehend aus jeweils miteinander korrespondierend angeordneten sechs Anschlüssen 31 am oberen Anschlussverteiler 21 und sechs Anschlüssen 32 am unteren Anschlussverteiler 22 auf. Die Filterstation 01 kann dadurch je nach benötigter Wasseraufbereitungsmenge mit bis zu sechs einzelnen Filtern 04 sowie gegebenenfalls verschiedenen Gebläsen bestückt werden. Bei einem noch höheren Wasserbedarf können mehrere Filterstationen 01 parallel betrieben werden.

Grundsätzlich ist natürlich jede beliebige Anzahl von Anschlusspaaren 03 denkbar, wobei die gewählte Anzahl von sechs Anschlusspaaren 03 den Vorteil einer besonders kompakten Anordnung mehrerer Filterstationen 01, bei denen die Anschlussverteiler 21, 22 kranzförmig ausgebildet sind, in einem Bienenwabenmuster erlaubt.

An dem Leitungsanschluss 06 über dem ersten, oberen Anschlussverteiler 21 können eine oder mehrere, vorzugsweise als Unterwasserpumpen 71, 72 ausgebildete angeschlossenen Pumpen angeschlossen sein. Oberhalb der einen oder der zwei Unterwasserpumpen 71, 72 kann ein vorzugsweise als Rückspülbehälter 08 dienender Behälter angebracht sein.

Wichtig ist hervorzuheben, dass unabhängig vom Vorhandensein einer oder zweier oder mehrerer Unterwasserpumpen 71, 72 ein zumindest mit dem ersten, oberen Anschlussverteiler 22 kommunizierender, im Filterbetrieb vom Filtrat bzw. Permeat durchströmter Rückspülbehälter 08 vorgesehen sein kann, der bei einer Rückströmung bzw. bei einem Rückstrom während eines Reinigungsprozesses einen Volumenausgleich gewährleistet.

Für eine besonders gründliche Filtration kann mindestens ein zwischen ein Anschlusspaar 03 einzubringendes oder eingebrachtes Filter 04 als ein Membranfilter ausgeführt sein.

Eine in Fig. 1, Fig. 2 und Fig. 3 dargestellte Filterstation 01 kann mit beispielsweise bis zu sechs Filtern 04 beispielsweise in Form von kartuschenförmigen Membranfiltern bestückt werden. Sie wird vorzugsweise senkrecht in einen das zu reinigende Wasser enthaltenden Wasserspeicher, beispielsweise einen Tank, gesetzt und an einem mit einer oder mehreren Pumpen 71, 72 verbundenen Permeatschlauch fixiert. Der Permeatschlauch bildet die an den Leitungsanschluss 06 angeschlossene Leitung. Je nach Anzahl der installierten Filter 04 wird die Filterstation 01 mit Gewichten 09 ausgerüstet, die als einem Auftrieb entgegenwirkende Kontergewichte dienen, damit sie auch bei Zuschalten der Luftquelle, beispielsweise eines Gebläses nicht auftreibt. Die mindestens eine Pumpe 71, 72 saugt im Filterbetrieb das Wasser infolge einer bevorzugt symmetrischen Anordnung zumindest der Anschlüsse 31 am oberen Anschlussverteiler 21 gleichmäßig durch die Filter 04 und fördert es durch den Permeatschlauch in einen Klarwasserbehälter. Die Länge des Permeatschlauches kann an die Geometrie des Wasserspeichers angepasst werden, beispielsweise bis zu einer Höhe von 3m.

Um dauerhaft einen hohen Durchfluss und eine lange Lebensdauer der Filter 04 sicher zu stellen, können die Filter 04 der Filterstation 01 regelmäßig vorzugsweise automatisch gereinigt werden. Hierzu werden die verbauten Filter 04 mit mindestens einer beispielsweise eingebauten Pumpe 71, 72 in regelmäßigen Zeitabständen zurück gespült. Das erforderliche Rückspülvolumen nimmt sich die Filterstation aus einem Rückspülbehälter 08, der sich oberhalb der am Leitungsanschluss 06 angeordneten mindestens einen Pumpe 71, 72 befindet. Zudem werden die Filter 04 regelmäßig mit Luft durchströmt, um das beispielsweise durch Fasern gebildete Filtermedium von Ablagerungen zu befreien. Hierzu verfügt die Filterstation 01 über einen Luftanschluss 05, an den eine Luftquelle, beispielsweise eine Druckluftquelle und/oder ein Gebläse angeschlossen ist. Die Luft wird über den als Luftverteiler wirkenden, zweiten, unteren Anschlussverteiler 22 mit ebenfalls symmetrischen Anschlüssen 32 gleichmäßig auf die angeschlossenen Filter 04 verteilt.

Bei größeren Wasseraufbereitungsanlagen können mehrere Filterstationen 01 parallel geschaltet werden.

Werden mehrere Filter 04 an eine einzige Luftquelle, beispielsweise an ein einziges Gebläse angeschlossen, ist es besonders wichtig, dass die Filter 04 gleichmäßig mit Luft beaufschlagt werden. Bekannt sind Systeme, die bei Aneinanderreihung von mehreren Filtern durch Querschnittsanpassungen dies gewährleisten sollen.

Bei einer in Fig. 1, Fig. 2 und Fig. 3 dargestellten Filterstation 01 erfolgt die gleichmäßige Luftverteilung jedoch über einen unteren Anschlussverteiler 22 mit bevorzugt symmetrisch angeordneten Anschlüssen 32. Ein besonderer Vorteil ist, dass dieser Anschlussverteiler 22 je nach Anzahl und Anordnung der Anschlüsse 32 flexibel mit mehreren Filtern 04 bestückt werden kann und jederzeit eine gleichmäßige Verteilung der zugeführten Luft erfolgt.

Auf der Filtratabsaugseite kann ein grundsätzlich identisch wie der untere Anschlussverteiler 22 aufgebauter oberer Anschlussverteiler 21 vorgesehen sein, der im Gegensatz zum unteren Anschlussverteiler 22 beispielsweise lediglich umgedreht, also über Kopf, angeordnet sein kann. Nun erfolgt auch hier bei unterschiedlicher Bestückung der Filterstation 01 mit Filtern 04 ein Absaugen mit gleichmäßigem Unterdruck des Filtrats aus allen angeschlossenen Filtern 04, weil die Anschlüsse 31, 32 an den Anschlussverteilern 21, 22 besonders vorteilhaft symmetrisch angeordnet sind, um eine gleichmäßige Luftzufuhr und/oder Filtratabsaugung sicherzustellen.

Bei einer in Fig. 1, Fig. 2 und Fig. 3 dargestellten Filterstation 01 kann das Filtrat mit einer Unterwasserpumpe 72 abgesogen und mit der gleichen Unterwasserpumpe 72, falls diese auch in die andere Richtung betrieben werden kann, oder mit einer weiteren Unterwassermotorpumpe 71, die in die entgegengesetzte Richtung durch die erste Unterwassermotorpumpe 72 zurück fördert, zurück gespült. Die benötigte Rückspülmenge wird dazu aus einer am Leitungsanschluss 06 angeschlossenen Leitung entnommen. Enthält die Leitung nicht genügend Wasser, kann diese mit einem durchströmten Rückspülbehälter 8 ausgestattet sein, um das Volumen zu vergrößern.

Zwei vorzugsweise als Unterwasserpumpen 71, 72 ausgeführten Pumpen können dabei in Serie oder parallel zueinander angeordnet sein.

Aufgrund ihrer Geometrie und ihres kompakten Aufbaus, vorzugsweise bei kranzförmig ausgeführten Anschlussverteilern 21, 22 und vorteilhaft bei sechs Anschlusspaaren 03, kann eine beschriebene Filterstation 01 in fast jeden Wasserspeicher beispielsweise durch dessen Zugangsöffnung installiert werden, von wo aus sie das gefilterte Wasser in einen weiteren Klarwasserspeicher z.B. fördern kann.

Eingesetzt werden kann die Filterstation 1 z.B. bei der Grauwasserreinigung.

Wichtig ist hervorzuheben, dass die Filterstation eine besonders einfache Herstellung erlaubt, da sie einerseits aus standardisierbaren Bauteilen besteht, beispielsweise entsprechend symmetrisch ausgestaltbare Stutzen zum Anschluss der Filter 04 an die Anschlusspaare, andererseits aus teils identisch ausgestaltbaren Bauteilen zusammengesetzt werden kann. So können beispielsweise die Anschlussverteiler 21, 22 identische Abmessungen und Anordnungen von Anschlüssen aufweisen, wodurch sie vereinfacht in Serie hergestellt werden können, die Lagerhaltung vereinfacht wird und Montagefehler, wie sie sonst durch die Verwendung ähnlicher, jedoch unterschiedlicher Teile häufig auftreten, verhindert werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Die Erfindung ist beispielsweise bei der Herstellung und dem Betrieb von Anlagen zur Wasserfiltration und/oder Wasseraufbereitung gewerblich anwendbar.

### Bezugszeichenliste

- 01: Filterstation
- 03: Anschlusspaar
- 04: Filter
- 05: Luftanschluss
- 06: Leitungsanschluss
- 08: Rückspülbehälter
- 09: Gewicht
- 10: Längsachse
- 11: Zentralrohr
- 12: Einblasstutzen
- 21: oberer Anschlussverteiler
- 22: unterer Anschlussverteiler
- 31: Anschluss (am oberen Anschlussverteiler)
- 32: Anschluss (am unteren Anschlussverteiler)
- 71: Pumpe
- 72: Pumpe

## Patentansprüche

1. Filterstation (01), umfassend einen ersten, oberen Anschlussverteiler (21) und einen zweiten, unteren Anschlussverteiler (22) mit jeweils einer gleichen Anzahl von mehreren korrespondierend angeordneten Anschlüssen (31, 32), von denen je ein Anschluss (31) des oberen Anschlussverteilers (21) und der entsprechende, korrespondierende Anschluss (32) des unteren Anschlussverteilers (22) jeweils ein zum Anschluss bzw. zur Aufnahme jeweils eines Filters (04) vorgesehenes Anschlusspaar (03) bilden, so dass die Filterstation (01) eine Anzahl von Filtern (04) aufzunehmen in der Lage ist, welche der Anzahl der Anschlusspaare (03) entspricht, wobei der obere Anschlussverteiler (21) einen Leitungsanschluss (06) aufweist, wobei der erste, obere Anschlussverteiler (21) und der zweite, untere Anschlussverteiler (22) durch ein sich entlang einer Längsachse (10) der Filterstation (01) erstreckendes Zentralrohr (11) miteinander verbunden sind, und wobei keine Strömungsverbindung zwischen dem ersten, oberen Anschlussverteiler (21) und dem zweiten, unteren Anschlussverteiler (22) via das Zentralrohr (11) besteht, **dadurch gekennzeichnet, dass** der untere Anschlussverteiler (22) einen Luftanschluss (05) aufweist, und an dem Leitungsanschluss (06) über dem ersten, oberen Anschlussverteiler (21) eine oder mehrere Unterwasserpumpen (71, 72) angeordnet sind, wobei oberhalb der einen oder der zwei Unterwasserpumpen (71, 72) ein zumindest mit dem ersten, oberen Anschlussverteiler (22) kommunizierender, im Filterbetrieb vom Filtrat durchströmter Rückspülbehälter (08) vorgesehen ist, welcher bei einem Rückstrom während eines Reinigungsprozesses einen Volumenausgleich gewährleistet.

2. Filterstation nach Anspruch 1, wobei zumindest der erste, obere Anschlussverteiler (21) via dessen Leitungsanschluss (06) mit mindestens einer Leitung und einer oder mehreren Pumpen (71, 72) in Verbindung steht, über welche vorzugsweise eine Leitung während des Filterbetriebs das Filtrat abfließt und über welche vorzugsweise eine Leitung während eines Reinigungsprozesses ein Rückstrom von Filtrat zumindest dem ersten, oberen Anschlussverteiler (21) und dem einen oder den mehreren an den Anschlusspaaren (03) angeschlossenen Filtern (04) zugeleitet wird.

3. Filterstation nach Anspruch 1 oder 2, wobei zumindest der zweite, untere Anschlussverteiler (22) als ein Luftverteiler dient, wobei wenigstens der zweite, untere Anschlussverteiler (22) via dessen Luftanschluss (05) zumindest zeitweilig mit einer Luftquelle kommuniziert und der eine oder die mehreren an den Anschlusspaaren (03) angeschlossenen Filter (04) zumindest über den zweiten, unteren Anschlussverteiler (22) wenigstens während eines Reinigungsprozesses vorzugsweise mit Luft beaufschlagt werden.

4. Filterstation nach einem der vorhergehenden Ansprüche, wobei die Anschlüsse (31) des oberen Anschlussverteilers (21) und die Anschlüsse (32) des unteren Anschlussverteilers (22) kranzförmig um die Längsachse (10) der Filterstation (01) angeordnet sind.

5. Filterstation nach einem der vorhergehenden Ansprüche, wobei mindestens ein zwischen ein Anschlusspaar (03) eingebrachtes Filter (04) als ein Membranfilter ausgeführt ist.

6. Filterstation nach einem der vorhergehenden Ansprüche, wobei sechs Anschlusspaare (03) zur Aufnahme von bis zu sechs Filtern (04) vorgesehen sind.

7. Filterstation nach einem der vorhergehenden Ansprüche, wobei die Anschlüsse (31, 32) an den Anschlussverteilern (21, 22) symmetrisch angeordnet sind.

## Claims

1. A filter station (01), comprising a first, upper connection distributor (21) and a second, lower connection distributor (22), with in each case an identical number of a plurality of correspondingly disposed connections (31, 32), of which in each case one connection (31) of the upper connection distributor (21) and the appropriately corresponding connection (32) of the lower connection distributor (22) form in each case a pair of connections (03) provided for connecting or for receiving, as the case may be, in each case one filter (04), such that the filter station (01) is capable of receiving a number of filters (04) corresponding to the number of pairs of connections (03), wherein the upper connection distributor (21) has a line connector (06); wherein the first, upper connection distributor (21) and the second, lower connection distributor (22) are connected to each other by a central tube (11) extending along a longitudinal axis (10) of the filter station (01); and wherein there is no flow connection via the central tube (11) between the first, upper connection distributor (21) and the second lower connection distributor (22); **characterised in that** the lower connection distributor (22) has an air supply (05); and **in that** one or a plurality of submersible pumps (71, 72) are disposed at the line connector (06) above the first, upper connection distributor (21), wherein a backwash tank (08) is provided above the one or above the two submersible pumps (71, 72), the backwash tank (08) communicating at least with the first, upper connection distributor (22) and being flowed through by the filtrate during filter operation, with the backwash tank (08) ensuring volume compensation in a backwash during a purification process.

2. The filter station as recited in claim 1, wherein at least the first, upper connection distributor (21) is connected via its line connector (06) to at least one line and to one or a plurality of pumps (71, 72), by way of which preferably one line the filtrate runs off during the filter operation; and by way of which preferably one line a backwash of filtrate is fed during a purification process at least to the first, upper connection distributor (21) and to the one or to the plurality of filters (04) connected to the pairs of connections (03).

3. The filter station as recited in claim 1 or 2, wherein at least the second, lower connection distributor (22) serves as an air distributor; wherein at least the second, lower connection distributor (22) communicates via its air supply (05) at least temporarily with an air source; and the one or the plurality of filters (04) connected to the pairs of connections (03) are preferably charged with air at least by way of the second, lower connection distributor (22), at least during a purification process.

4. The filter station as recited in one of the previous claims, wherein the connections (31) of the upper connection distributor (21) and the connections (32) of the lower connection distributor (22) are disposed annularly about the longitudinal axis (10) of the filter station (01).

5. The filter station as recited in one of the previous claims, wherein at least one filter (04) that is inserted between a pair of connections (03) is designed as a membrane filter.

6. The filter station as recited in one of the previous claims, wherein six pairs of connections (03) for receiving up to six filters (04) are provided.

7. The filter station as recited in one of the previous claims, wherein the connections (31, 32) are symmetrically disposed at the connection distributors (21, 22).

## Revendications

1. Poste de filtration (1), comprenant un premier répartiteur de raccordement supérieur (21) et un deuxième répartiteur de raccordement inférieur (22), chacun doté d'un même nombre de plusieurs raccords (31, 32) agencés de manière correspondante, dont un raccord (31) du répartiteur de raccordement supérieur (21) et son raccord homologue correspondant (32) du répartiteur de raccordement inférieur (22) forment respectivement un couple de raccord (03) prévu pour brancher ou pour recevoir respectivement un filtre (04), de telle sorte que le poste de filtration (01) est en mesure de recevoir un nombre de filtres (04) qui correspond au nombre des couples de raccord (03), le répartiteur de raccordement supérieur (21) présentant une bouche de raccordement de conduite (06), le premier répartiteur de raccordement supérieur (21) et le deuxième répartiteur de raccordement inférieur (22) étant reliés l'un à l'autre par un tube central (11) s'étendant le long d'un axe longitudinal (10) du poste de filtration (01), et aucune conduite d'écoulement n'existant entre le premier répartiteur de raccordement supérieur (21) et le deuxième répartiteur de raccordement inférieur (22) par le biais du tube central (11),
**caractérisé en ce que** le répartiteur de raccordement inférieur (22) présente une bouche d'air (05) et que sont agencées une ou plusieurs pompes immergées (71, 72) au niveau de la bouche de raccordement de conduite (06) au-dessus du premier répartiteur de raccordement supérieur (21), un bac de rétention de rinçage (08) traversé par le filtrat, en mode de filtration, et communiquant au moins avec le premier répartiteur de raccordement supérieur (22) étant prévu au-dessus de l'une ou des deux pompes immergées (71, 72), lequel bac de rétention de rinçage (08) assure une compensation de volume en cas de flux inverse lors d'un processus de nettoyage.

2. Poste de filtration selon la revendication 1, le premier répartiteur de raccordement supérieur (21) au moins étant, par le biais de sa bouche de raccordement de conduite (06), en liaison avec au moins une conduite et une ou plusieurs pompes (71, 72), conduite de préférence par laquelle le filtrat s'écoule pendant la filtration et de préférence par laquelle un flux de retour de filtrat, au cours d'un processus de nettoyage, est acheminé au moins vers le premier répartiteur de raccordement supérieur (21) et vers le ou les plusieurs filtres (04) branchés sur les couples de raccord (03).

3. Poste de filtration selon la revendication 1 ou 2, le deuxième répartiteur de raccordement inférieur (22) au moins servant de répartiteur d'air, le deuxième répartiteur de raccordement inférieur (22) au moins communiquant au moins temporairement avec une source d'air par le biais de sa bouche d'air (05) et le ou les plusieurs filtres (04) branché(s) sur les couples de raccords (03) étant exposé(s) de préférence à de l'air au moins par le deuxième répartiteur de raccordement inférieur (22) au moins au cours d'un processus de nettoyage.

4. Poste de filtration selon l'une quelconque des revendications précédentes, les raccords (31) du répartiteur de raccordement supérieur (21) et les raccords (32) du répartiteur de raccordement inférieur (22) étant agencés en couronne autour de l'axe longitudinal (10) du poste de filtration (01).

5. Poste de filtration selon l'une quelconque des revendications précédentes, au moins un filtre (04) introduit entre un couple de raccords (03) étant mis en oeuvre en tant que filtre à membrane.

6. Poste de filtration selon l'une quelconque des revendications précédentes, six couples de raccord (03) étant prévus pour recevoir jusqu'à six filtres (04).

7. Poste de filtration selon l'une quelconque des revendications précédentes, les raccords (31, 32) étant agencés de manière symétrique sur les répartiteurs de raccordement (21, 22).
